# EUROPEAN PATENT APPLICATION

(11) **EP 4 843 926 A1**
(43) Date of publication of application: **25.11.2026**
(21) Application number: 26160766.7
(22) Date of filing: 25.02.2026
(51) Int. Cl.: B65G 7/02

(54) **DEVICE FOR MOVING LOADED PALLETS**

(30) Priority: 22.05.2025 GB 202508022
(71) Applicant: Granta Automation Ltd, Cambridgeshire CB21 4NN (GB)
(72) Inventor: SMITH, David, Linton, CB21 4NN (GB); PHILLIPS, Matthew, Linton, CB21 4NN (GB); YATES, Justin, Linton, CB21 4NN (GB); REMMINGTON, Levi, Linton, CB21 4NN (GB); YATES, Harry, Linton, CB21 4NN (GB); MARSH, John, Linton, CB21 4NN (GB); MARSH, Joseph, Linton, GB21 4NN (GB); MARSH, Derek, Linton, CB21 4NN (GB); MARSH, Matthew, Linton, CB21 4NN (GB); MARSH, Roger, Linton, CB21 4NN (GB)
(74) Representative: Cleveland Scott York

(57) **Abstract**

A device (1) for moving a loaded pallet (2) having a flat sheet (5) which is secured in a fixed position relative to a floor surface to form a slide path for a loaded pallet, an an actuator (20, 21, 22, 23) which is secured in a fixed position relative to the flat sheet. The actuator has a contact member (23) which is adapted to push or pull a loaded pallet over the slide path. The device may be used for moving loaded pallets whilst keeping the pallet close to the floor surface to enable easy removal by a manual pallet truck.

## Description

The present application is directed to a device for moving loaded pallets, a combination of a device for moving loaded pallets and a loaded pallet, and a method of moving loaded pallets. Devices for moving loaded pallets are sometimes used in factories and warehouses. More specifically, devices for moving loaded pallets may be used as part of a production line.

Pallets are sometimes manoeuvred using pallet trucks which are hand operated and are also known as pallet jacks or pallet pumps. Powered pallet trucks are also available. Operators may ride on, or walk behind, this type of truck. These generally have the same fork arrangement as hand operated pallet trucks. Forklift trucks, specifically counterbalance forklift trucks which have a counterweight to balance a load, are also used to manoeuvre loaded pallets. With forklift trucks an operator generally sits on the truck and the truck has its own powered drive mechanism such as an engine. Forklift trucks are disadvantageous from a health and safety perspective. Pallet trucks are generally taking their place where appropriate, however, the use of pallet trucks is difficult because they have less ability to vary the height of their forks. They can raise their forks to raise a load off the floor, but they do not have the ability to raise their forks without having their roller(s) on the ground near to the front of the forks. When pallets are conveyed using a roller conveyor, ramps are sometimes used to bring the forks of a pallet truck to an appropriate height to remove a pallet from the rolling surface of the roller conveyor. This is because roller conveyors have a height which must accommodate the rollers themselves and any supporting framework. The common alternative to using a pallet truck is to use a counterbalance forklift truck.

When pallet trucks are being used it is much safer if ramps in a workspace can be avoided, so that a heavily laden pallet truck does not roll down a ramp or fall off the edge of a ramp and injure users or damage property. Ramps also take up lots of room in a workspace because their inclines must not be too steep. They must therefore extend over a significant area of a factory floor. Ramps also require a substantial amount of materials and professional installation.

In summary, counterbalance forklift trucks are not allowed in production areas in many factories in the UK due their weight, size and health and safety risks. This means that only pallet trucks and powered pallet trucks can be safely used in production areas. However, pallet trucks simply do not work with current methods of automatic pallet movement (e.g. roller conveyor) for the reasons mentioned above. Many systems and processes require the automatic movement of loaded pallets, e.g. out of a palletizer, between areas of a factory, or through a process like labelling or wrapping. However, currently there is no method to transition from automatic pallet movement (e.g. on a roller conveyor) to pallet truck take-off without a ramp. Ramps are also banned in most production areas and are unsafe. This is a real challenge that is unmet in the market currently.

It is amongst the objects of the invention to address one or more of these problems.

In a first aspect the invention provides a device for moving a loaded pallet comprising:
a flat sheet which is secured in a fixed position relative to a floor surface to form a slide path for a loaded pallet, and
an actuator which is secured in a fixed position relative to the flat sheet, wherein the flat sheet has a surface for supporting a loaded pallet, and
wherein the actuator comprises a contact member which is adapted to push or pull a loaded pallet over the slide path.

This device provides a way of moving loaded pallets in which the pallet remains very close to floor level. This makes it compatible with a pallet truck. This type of arrangement may take the place of roller conveyors or other conveyors which are used in automatic pallet movement. The present invention provides an almost floor level take-off for a pallet truck, which is especially useful for pallets with a slat along the bottom front of the pallet, as is typical on all UK standard (e.g. chep) pallets. The invention therefore provides a way of transitioning a loaded pallet from an automatic pallet movement (e.g. one involving an automated process) to a manual pallet movement, e.g. a pallet truck.

It is also more space efficient that installing roller (or other type of) conveyor. It also avoids the need to use forklift trucks. The flat sheet allows the forks of a pallet truck to easily access the pallet to lift it, without the need for ramps to bring the forks of the pallet truck to an appropriate height. The lack of ramps and avoidance of using a forklift provides a device which is safer for workers. It also provides a more compact and way of moving loaded pallets. It does so by avoiding the need to provide ramps (as per the prior art) as discussed in the introduction, which bring the forks of a pallet truck to an appropriate height.

In some embodiments the slide path is generally slightly wider than the width of a pallet. In some embodiments the ratio of the width of the slide path to the width of a pallet is between 0.8 and 1.2. In some embodiments the slide path is adapted to support the weight of a loaded pallet, preferably a weight of 100-1600kgs. In some embodiments the flat sheet has a continuous smooth upper surface. In some embodiments an upper surface of the flat sheet is planar. In some embodiments the flat sheet has a constant thickness across its area. In some embodiments the coefficient of friction between the sheet and a wooden pallet is between 0.2-0.6. In some embodiments the coefficient of friction between a pallet and the flat sheet is less than 0.6.

The actuator is fixed in a position relative to the flat sheet to provide an anchor point to exert a force against a pallet which is positioned on the flat sheet. In use, the force is exerted by the contact member of the actuator which is adapted to push or pull a loaded pallet over the slide path.

In some embodiments the contact member is a pusher arm. In some embodiments the contact member comprises a coupling, preferably an automatic and removeable coupling, for pulling (rather than pushing) a pallet over the slide path. This coupling may comprise a grabber arm and pincer, or a hook.

In some embodiments the actuator comprises a motor. This provides a sufficient force and convenient way of providing a force to move a pallet over the slide path. The motor may be an electric motor. This provides a high degree of torque which is useful for moving heavily loaded pallets and overcoming the associated friction between the pallet and the flat sheet.

The actuator may comprise a pneumatic, electric or hydraulic drive train. These provide an efficient and reliable way of transmitting power associated with the actuator. For example, an electric motor may drive a pump which operates a hydraulic or pneumatic piston. In some embodiments the actuator comprises an electric motor. This provides a convenient and high-torque way of moving the contact member to slide a pallet over the slide path. In some embodiments the actuator comprises an electric motor which is coupled to a drive belt (e.g. a chain) which runs around two axles to drive the contact member.

The contact member may be adapted to push or pull a loaded pallet linearly over the slide path. A linear movement is advantageous because it is more energy efficient than a non-linear movement. It also provides a simple mechanism which is easy to construct. Furthermore, linear movement is easier is easier to predict and control. The linear movement over a slide path provides a precise and controlled movement of a loaded pallet.

In some embodiments the actuator comprises two drive points which transmit a force to drive the contact member. This provides a stable and robust way of driving the contact member which is well adapted to overcome sticking points between the pallet and the flat sheet.

In some embodiments the two drive points are each attached to a drive belt. This provides reliable and direct power transmission to the contact member.

In some embodiments the drive belt runs around two axles which are spaced apart and secured in a fixed position relative to the flat sheet. In some embodiments the two drive points are each attached to separate drive belts, wherein each of the drive belts run around common first and second axles which are driven by a power source.

Examples of drive belts as mentioned herein can include chains and flexible belts, such as rubber drive belts.

**In** some embodiments, the device may further comprise a further one or more flat sheets which form the slide path, wherein the flat sheets are modular. This means that the flat sheets can be assembled into an array in which the edges of one sheet tesselate with an edge of a further sheet. The flat sheets may also be provided with holes or other fasteners for enabling one flat sheet to be secured to an adjacent flat sheet, or to the floor. The shapes of the flat sheets may also enable their engagement/disengagement to form an array, for example a slide path.

**In** some embodiments the modular flat sheets form a continuous slide path.

**In** some embodiments the flat sheet, or flat sheets, is/are a metal sheet (or sheets), such as a steel sheet. This is advantageous because the metal has a low coefficient of friction and is hardwearing.

In some embodiments the device is provided adjacent to a conveyor such as a roller conveyor. This means that items can be removed from the conveyor and stacked onto an adjacent pallet which is located on the slide path of the device. The pallet, once loaded, may then be moved quickly by the device from a location on the slide path where it is loaded to a location on the slide path from which it may be picked up easily with a pallet truck. This means that once the pallet has been pushed out of its loading position on the slide path, another empty pallet may be moved into the loading position. This means that an empty pallet may be loaded whilst the pallet truck is manoeuvred into position to remove the loaded pallet from the device. This provides a more efficient loading device because the loading position is occupied by a loaded pallet for as little time as possible, wasting minimal loading time.

In some embodiments the slide path is linear. In some embodiments the slide path has a length of greater than 2, 4, 6, 8, 10, 15 or 20 m. In some embodiments the actuator and contact member are adapted to push a loaded pallet over a slide path having a length of greater than 2, 4, 6, 8, 10, 15 or 20 m. This is particularly useful when the device is to be used for moving loaded pallets around a warehouse or factory. In some embodiments the slide path is provided with one or more guide means (for example a bumper strip or other barrier), which run along a portion of the length of at least one side of the slide path. In some embodiments the guide means run along portions of both sides of the slide path. The guide means help(s) to keep a pallet from falling off the slide path whilst it is pushed or pulled.

In some embodiments the flat sheet has a thickness of between 4-20 mm and in some embodiments between 8-10 mm. This provides an acceptable balance between hard-wearing ability and rigidity of the flat sheets and a height which is suitable for removal of a pallet by a pallet truck.

In some embodiments the contact portion for pushing or pulling a loaded pallet comprises an arm connected to a frame portion. This provides a length over which force is applied to a pallet. This prevents twisting of a pallet. In some embodiments the length of the arm corresponds to the length of a pallet, or 0.8 to 1.2 times the length of a pallet.

In some embodiments the arm comprises wheels for supporting its weight. This allows a sturdy and robust arm to be used, whilst minimizing the frictional interaction of the arm with the surface over which it is moved.

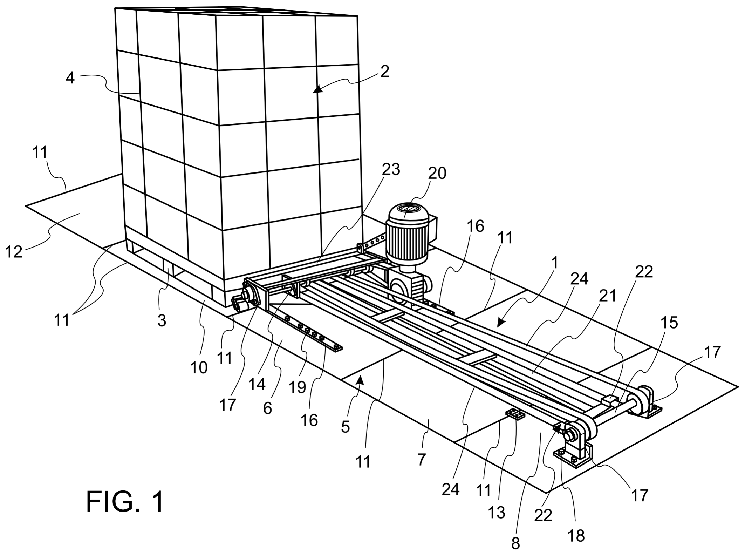

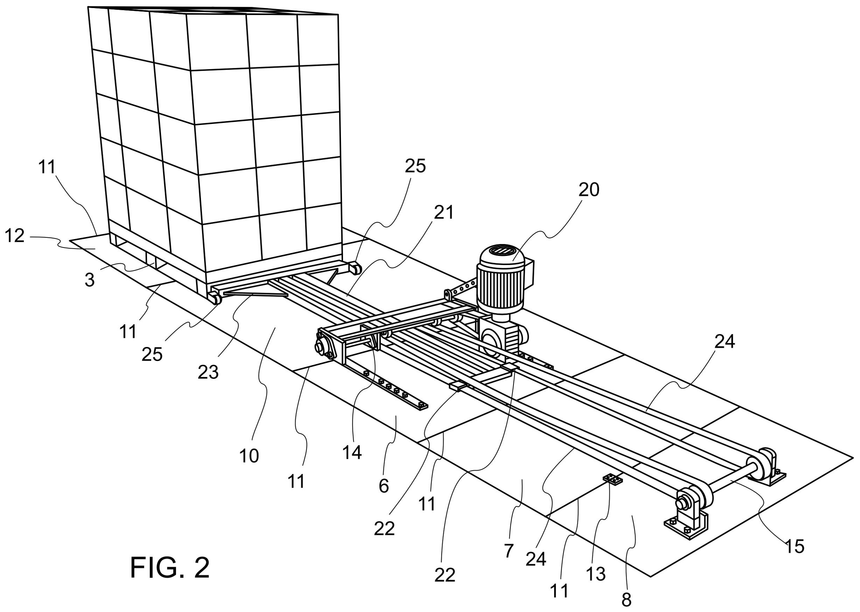

In some embodiments a portion of the actuator which comprises a drive mechanism for driving the contact member runs along one side of the slide path. This provides a space saving alternative to the embodiments shown in figures 1 and 2 below. The contact member may be a rigid bar which protrudes from (optionally perpendicular to) the portion of the actuator which runs along one side of the slide path. This embodiment is particularly useful where the slide path is long because it avoids the need for an actuator with a long frame which is positioned at one end of the slide path.

In some embodiments the actuator comprises two portions which comprise a drive mechanism for driving the contact member, which two portions run along opposite sides of the slide path and wherein the contact member bridges the slide path. This provides a space-saving alternative to the embodiments shown in figures 1 and 2 below, which is also well suited to withstanding the high drive forces needed to move heavy pallets. In some embodiments the contact member is driven by two drive mechanisms, each of which is located in one of the two portions of the actuators which run along opposite sides of the slide path. The contact member may be a rigid bar which protrudes from (optionally perpendicular to) a portion of the actuator which runs along one side of the slide path. This is particularly useful where the slide path is long because it avoids the need for an actuator with a long frame which is positioned at one end of the slide path.

In a second aspect there is provided a combination of a device as described herein and a loaded pallet. When a pallet is described as a loaded pallet herein, this is to be understood that the pallet need not be "fully loaded'. The term 'load' simply means that there must be some sort of partial (or full) load on the pallet.

In some embodiments the actuator is adapted to exert a force on the loaded pallet according to the following formula: $Force \left(N\right) \geq \frac{1}{3} \times loaded pallet weight \left(Kg\right)$

Surprisingly this provides a force which is sufficient to move a loaded pallet efficiently over the slide path. In some embodiments the loaded pallet weighs between 100-2000 kg. In some embodiments the loaded pallet weighs up to 2000 kg and more preferably up to 1600 kg. The devices described herein have been found to effectively move pallets which weigh up to 1600 kg or 2000 kg.

In some embodiments the loaded pallet is a Euro pallet, UK pallet or a dolav. A Euro pallet is sometimes known as the EUR-pallet or EPAL-pallet. The specification is provided by the UIC pallet working group and the UIC 435-2 leaflet. This type of pallet does not have a base strut along two sides. A UK pallet has a similar construction but does have base struts around all 4 sides. A dolav is a type of pallet which is generally made from plastic and may have a box-like container structure extending upwardly from its base. Dolav pallets are available from DOLAV UK Limited: Neaton Business Park, Norwich Road, Watton, Norfolk, IP25 6JB and https://dolav.com/en gb/. The invention may be used with, or comprise, pallets constructed from materials including wood, metal or plastic.

The term pallet as used herein is intended to include skids. Typically, a skid has 4 feet underneath a top loading deck whereas most pallets have 3 or 4 stringers across the length of the pallet in either direction.

In some embodiments the pallet is a UK pallet and wherein the flat sheet has a thickness of 8-10 mm. This thickness is low enough for the forks of most pallet trucks to be liftable by a sufficient amount to remove a pallet from the flat sheet.

In a further aspect of the invention there is provided a method for moving a loaded pallet comprising the steps of;
providing a combination of a pallet and a device as described herein, and
pushing or pulling the loaded pallet over the slide path.

The method may include a step of loading the pallet prior to pushing or pulling the pallet over the slide path. When the pallet is pushed or pulled over the slide path it may be moved from a loading position to a pick-up position. The pick-up position may be suitable for removing the pallet from the device with a pallet truck. The loading position may be adjacent to the end of a conveyor and/or adjacent to the end of a production line. The method may include a step of an automated movement of the loaded pallet prior to pushing or pulling the loaded pallet over the slide path.

In a further aspect of the invention there is provided a production line, or other automatic device for moving goods and/or a pallet, and a device according to the invention. The device may be positioned at the end of the automatic device or production line. The automatic device or production line may comprise a conveyor, in some embodiments a roller conveyor. The automatic device or production line may comprise a palletizer robot. The automatic device or production line may comprise a pallet feeder for supplying empty pallets to a loading location on the slide path of the device. The device according to the invention may be located adjacent to a conveyor in the automatic device or production line with a palletizer robot adapted to remove product from the conveyor and load product onto a pallet in the device. The pallet may then be moved by the device from a loading location on the slide path to a pick-up location on the slide path, leaving the loading location free to accept another pallet for loading.

The automatic device or production line may be a loading system for loading product onto pallets.

The automatic device or production line may incorporate features of any of the other aspects of the invention.

In a further aspect there is provided an automated arrangement for moving loaded pallets or for loading pallets, which comprises a device as described herein. In some embodiments the automated arrangement comprises a conveyor, which may be a roller conveyor. In some embodiments, the automated arrangement may be a production line, a palletizer station, an arrangement for moving goods between locations (for example in a factory), a wrapping station, a labelling station or a vehicle loading station.

Embodiments of the invention will now be described with reference to the figures of the drawings, in which:
Figure 1 shows a combination of a device according to a first embodiment of the invention and a loaded pallet in a first configuration.
Figure 2 shows a combination of a device according to the invention and a loaded pallet in a second configuration.
Figure 3 shows a device according to a second embodiment of the invention which forms part of a palletizer station.
Figure 4 shows a perspective view of a portion of the device shown in figure 3.
Figures 5A and 5B show rear perspective and plan views respectively of a third embodiment of the invention.

Figure 1 shows a device 1 for moving a loaded pallet 2. The loaded pallet is a wooden pallet 3 which has been stacked with boxes of product 4. The combined weight of the pallet and the product is around 500 kg. In other working embodiments the weight of the pallet is 1600kg or 2000kg. The device 1 comprises a flat sheet 5 which is made up of a number of modular sheets 6, 7, 8, 10, 12. The modular panels 10 and 12 form a linear slide path over which the loaded pallet 1 may be slid by the device. The modular sheets are made of metal (steel) and have a constant thickness across their area. The thickness is around 10 mm. The load bearing upper surfaces of the sheets are completely flat and smooth. The edges 11 of the sheets are generally straight and tesselate with one another. This enables easy connection of the sheets. The sheets are provided with through holes (not shown for clarity) which enable the connection, either of the sheets to the floor, and/or to one another to hold the sheets together and in a fixed position relative to the floor. Some of the sheets are joined to one another by tabs such as the tab 13. This provides a robust attachment between sheets.

The device 1 comprises two axles 14, 15 which are spaced apart. Each axle is held at each end by bearings which are accommodated in axel mounts 17. One (in some embodiments both) of the axle mounts is secured by bolts 18 to the modular sheets 8 and 6. The axle 14 is secured to modular sheet 6 by retainer strips 16 which provide a line of bolted 19 attachment points.

The device is provided with an electric motor 20 which is connected to a power source and controller (not shown). The electric motor drives the axle 14. Two looped drive chains 24 pass around the axle 14 and the axle 15 so that when the motor 20 drives the axle 14, rotational force is transmitted to axle 15 to make axle 15 turn.

A rigid metal frame 21 is attached to each of the drive chains (on their lower portion) at respective drive points 22. At these drive points the frame is locked to the respective chains so that the motor 20 can drive the frame back and forth.

At one of its ends the rigid frame 21 is provided with a pusher arm 23. This pusher arm is a rigid metal arm which forms a T shape with the rest of the frame 21. The pusher arm 23 is shown in more detail in figure 2.

Figure 2 shows the device and loaded pallet from figure 1 with the frame 11 and pusher arm 23 in a partially extended position. The drive points 22 where the frame 11 is connected to the lower portions of the drive chains 24 are more clearly shown in this figure. The drive points are formed by clamps which clamp the frame to the lower portions of the chain. The pusher arm 23 is provided with two wheels 25 which support its weight and run along the top surface of the modular sheets 10 and 12 as the pusher arm moves back and forth. The modular sheets 10 and 12 form the slide path over which the pusher arm 23 pushes the pallet 3. The pusher arm has the same width as one of the sides of the pallet. The edges 11 of the modular flat sheets are also shown in this figure. In this embodiment these wheels are positioned close to the ends of the pusher arm.

The motor 20 drives the drive chains 24 via the axles 14 and 15 and the drive chains transmit the motor's power to the pusher arm 23 to push the pallet 3 over the slide path. Once the pallet has been pushed to its final 'pick-up' location which corresponds the maximum extension of the frame 21 and pusher arm 23 from the axle 14, the direction of the motor is reversed and the frame and pusher arm 23 are retracted to their positions shown in figure 1 to leave the loaded pallet 3 in its pick-up location. A new empty pallet may then be moved into the location of the loaded pallet in figure 1. The loaded pallet may then be easily removed using a pallet truck, as it is already only just (around 10 mm) above floor level. The removal does however take some time to properly align the forks of the pallet truck and raise and lower the forks. During this time, the empty pallet which has been moved into the position of the pallet shown in figure 1 may be loaded, thus wasting no time and providing an efficient loading process.

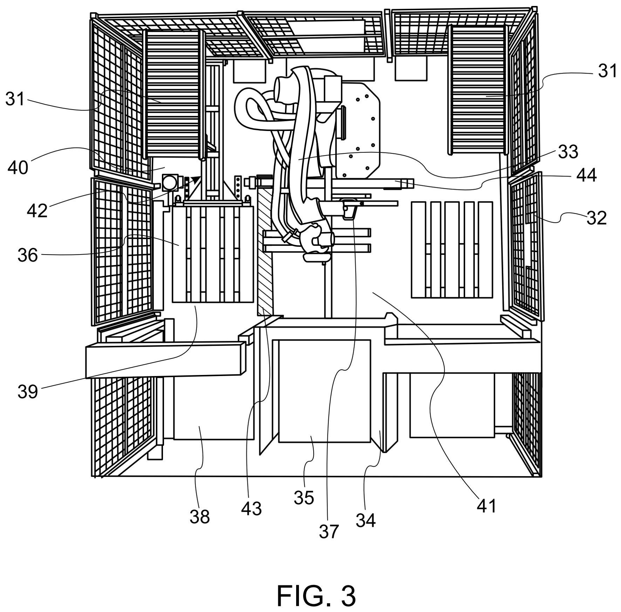

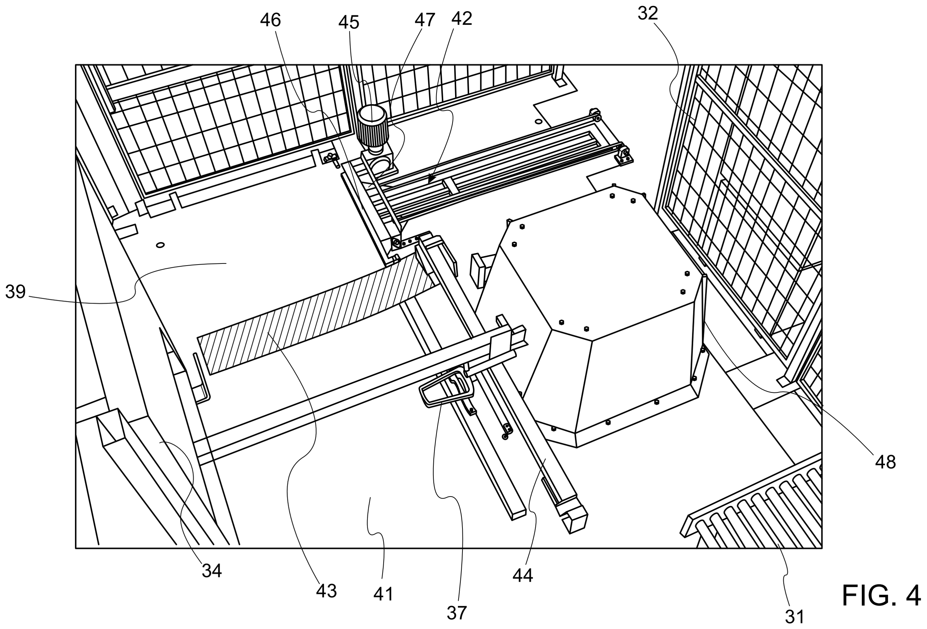

Figures 3 and 4 show a second embodiment of the invention. This embodiment is a palletizer station. Figure 4 is a zoomed in view of a portion of the station, with the palletizer robot 33 and the pallet 36 removed. The figures 3 and 4 show a palletizer station having two roller conveyors 31 which feed goods into the station. The station is surrounded by a cage 32 to prevent workers from getting close to the palletizer robot 33. The cages are provided with apertures through which goods on the roller conveyors 31 enter the station.

The base of the station is formed by flat metal sheets 39-41. These flat metal sheets are modular and generally square, so that their sides tesselate and may be formed into an array. The flat sheets are bolted to the floor. In some embodiments the sheets are not bolted directly to the floor, but instead are bolted to the palletizer robot (which is bolted to the floor itself), either directly or via their neighbouring sheets, to which they are attached.

In figure 3 an actuator of a device 42 according the invention for moving a loaded pallet is bolted to the flat metal sheet 40. This is shown in more detail in figure 4. The sheets 39 and 38 form a slide path over which the pallet may be slid, preferably once loaded.

A pallet feeder 34 is present and contains a stack of empty pallets 35. These are stacked one on top of the other. A pallet is removed from the bottom of the stack by the grabber arm and pincer 37 which extends towards the bottom of the pallet feeder 34 from the position shown in figure 4 and extracts a pallet 35 through a slot in the bottom of the pallet feeder. The pallet is drawn onto the flat sheet 41 and urged sideways by the pusher bar 43 which runs to and fro along the traveller 44, such that the pallet is urged into a loading location on top of flat sheet 39. Pallet 36 in figure 3 is shown in the loading location. The palletizer robot then loads goods from the left hand roller conveyor 31 (optionally from both roller conveyors 31) onto the pallet. The base 48 of the palletizer robot is shown in figure 4 but the robot itself is not shown in figure 4 for clarity.

Once the pallet is fully loaded so that the total weight is between 100 and 2000 kg, the actuator 42 is actuated so that the electric motor 45 dives the pusher arm 46 away from the axle 47. The features of the actuator are identical to those of the actuator shown in figures 1 and 2. The pusher arm 46 contacts the pallet and urges it over the slide path formed by flat sheets 39 and 38 to move the loaded pallet into a pick-up location which is on top of the flat sheet 38. From here the forks of a pallet truck resting on the floor may be slid under the pallet and the pallet may be removed from the palletizer station. Whilst the pallet truck is being manoeuvred into position and raised, the direction of the motor 45 is reversed and the pusher arm 46 is retracted to the position shown in figure 3. A new empty pallet is removed from the pallet feeder by pincer 37 and slid into the loading position atop of flat sheet 39 by the pusher bar 43. The loading process continues whilst the loaded pallet is removed. No ramps are necessary to align the height of the pallet truck with the loaded pallet because the flat sheets have such a low thickness compared to a roller conveyor.

The arrangement of the actuator 42 and roller conveyor 31 on the left hand side of the palletizer station shown in figure 3 (and 4) is duplicated on the right hand side of the palletizer station shown in figure 3, however the actuator on the right hand side of the palletizer station is not shown in figure 3 for clarity.

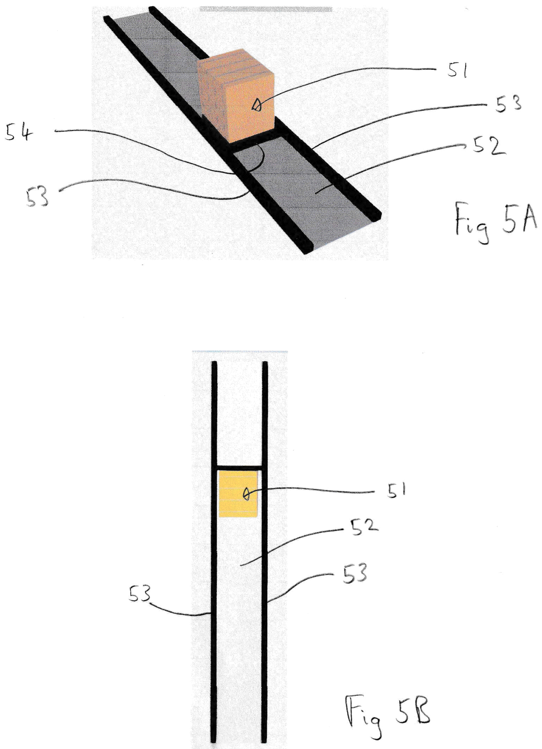

Figures 5A and 5B show a third embodiment of the invention which is a device for moving loaded pallets over large distances in a factory or warehouse. Figure 5A shows a loaded pallet 51 located in the middle portion of a linear slide path 52. The slide path 52 is formed of flat metal sheets which have a completely smooth upper, load bearing, surface. The flat metal sheets are fixed to the floor so that they cannot move relative to one another. Each flat metal sheet is also fixed to its adjacent sheet or sheets. The slide path is rectangular, with a length of around 20 m and a width which is about the same as a pallet. Along each long side of the slide path there is a portion of an actuator 53. The actuator 53 has a contact bar 54 which bridges the gap between the two portions of the actuator. Figure 5B is a plan view of this embodiment which shows the contact bar more clearly.

Figure 5B has been rotated relative to figure 5A. The two sides of the actuator are fixed relative to the floor of the warehouse or factory and relative to the flat metal sheet which forms the slide path. The two portions of the actuator each comprise a chain drive which is driven by an electric motor (not shown). The chain drive is encased in the housing of the actuator portions which is visible in figures 5A and 5B. The chain drive runs around axles adjacent to each end of the slide path 52. The chain is linked to the contact bar 54 such that when the electric motor drives the chains, the contact bar is driven from each of its ends to push the loaded pallet 51 along the slide path 52. The actuator therefore comprises two drive points by which the contact member (the contact bar) is driven. Generally, the pallet may be moved from a first location at one end of the slide path to a second 'removal' location at another end of the slide path, where it can be accessed and removed by a pallet truck. Once the pallet has been pushed to the removal location, the direction of the motor may be reversed to bring the contact bar 54 back to the first location at the other end of the slide path, ready to contact the next pallet. The first location may be a loading location, in which a palletizer robot loads the pallet.

In other embodiments the actuator may comprise only one of the portions shown in figures 5A and 5B, that is a portion only on one side of the slide path, with the contact bar being driven only from that side of the slide path. That type of actuator works in a similar way to the one described in figures 5A and 5B, except that the contact bar (or any other contact member) is only driven from one side of the slide path.

### Statements of Invention

1. A device for moving a loaded pallet comprising:
   a flat sheet which is secured in a fixed position relative to a floor surface to form a slide path for a loaded pallet, and
   an actuator which is secured in a fixed position relative to the flat sheet, wherein the flat sheet has a surface for supporting a loaded pallet, and
   wherein the actuator comprises a contact member which is adapted to push or pull a loaded pallet over the slide path.
2. A device for moving a loaded pallet according to statement 1 wherein the actuator comprises a motor.
3. A device for moving a loaded pallet according to either preceding statement wherein the actuator comprises a pneumatic, electric or hydraulic drive train.
4. A device for moving a loaded pallet according to any preceding statement wherein the contact member is adapted to push or pull a loaded pallet linearly over the slide path.
5. A device for moving a loaded pallet according to any preceding statement wherein the actuator comprises two drive points which transmit a force to drive the contact member.
6. A device for moving a loaded pallet according to statement 5 wherein the two drive points are each attached to a drive belt.
7. A device for moving a loaded pallet according to statement 6 wherein the drive belt runs around two axles which are spaced apart and secured in a fixed position relative to the flat sheet.
8. A device for moving a loaded pallet according to any preceding statement further comprising a further one or more flat sheets which form the slide path, wherein the flat sheets are modular.
9. A device for moving a loaded pallet according to statement 8 wherein the modular flat sheets form a continuous slide path.
10. A device for moving a loaded pallet according to any preceding statement wherein the flat sheet is a metal sheet.
11. A device for moving a loaded pallet according to any preceding statement wherein the device is provided adjacent to a conveyor such as a roller conveyor.
12. A device for moving a loaded pallet according to any preceding statement wherein the slide path is linear.
13. A device for moving a loaded pallet according to any preceding statement wherein the flat sheet has a thickness of 8-10 mm.
14. A device for moving a loaded pallet according to any preceding statement wherein the contact portion for pushing or pulling a loaded pallet comprises an arm connected to a frame portion.
15. A device for moving a loaded pallet according to statement 14 wherein the arm comprises wheels for supporting its weight.
16. A device for moving a loaded pallet according to any preceding statement wherein a portion of the actuator which comprises a drive mechanism for driving the contact member runs along one side of the slide path.
17. A device for moving a loaded pallet according to any preceding statement wherein the actuator comprises two portions which comprise a drive mechanism for driving the contact member, which two portions run along opposite sides of the slide path and wherein the contact member bridges the slide path.
18. A combination of a device according to any preceding statement and a loaded pallet.
19. A combination according to statement 18 wherein the actuator is adapted to exert a force on the loaded pallet according to the following formula: $Force \left(N\right) \geq \frac{1}{3} \times loaded pallet weight \left(Kg\right)$
20. A combination according to statement 18 or 19 wherein the loaded pallet weighs between 100-2000 Kg.
21. A combination according to any of statements 18 to 20 wherein the loaded pallet is a Euro pallet, UK pallet or a dolav.
22. A combination according to any of statements 18 to 21 wherein the pallet is a UK pallet and wherein the flat sheet has a thickness of 8-10 mm.
23. A method for moving a loaded pallet comprising the steps of;
   providing a combination according to any of statements 18-22, and
   pushing or pulling the loaded pallet over the slide path.

## Claims

1. A device (1) for moving a loaded pallet (2) comprising:
a flat sheet (5, 6, 7, 8, 10, 12) which is secured in a fixed position relative to a floor surface to form a slide path for a loaded pallet, and
an actuator (20, 21, 22, 23) which is secured in a fixed position relative to the flat sheet,
wherein the flat sheet has a surface for supporting a loaded pallet, and
wherein the actuator comprises a contact member (23) which is adapted to push or pull a loaded pallet (2) over the slide path.

2. A device for moving a loaded pallet according to claim 1 wherein the actuator comprises a motor (20).

3. A device for moving a loaded pallet according to either preceding claim wherein the contact member is adapted to push or pull a loaded pallet linearly over the slide path.

4. A device for moving a loaded pallet according to any preceding claim wherein the actuator comprises two drive points (22) which transmit a force to drive the contact member.

5. A device for moving a loaded pallet according to claim 4 wherein the two drive points (22) are each attached to a drive belt (24).

6. A device for moving a loaded pallet according to claim 5 wherein the drive belt runs around two axles (14, 15) which are spaced apart and secured in a fixed position relative to the flat sheet.

7. A device for moving a loaded pallet according to any preceding claim further comprising a further one or more flat sheets (10, 12) which form the slide path, wherein the flat sheets are modular.

8. A device for moving a loaded pallet according to any preceding claim further comprising a conveyor such as a roller conveyor (31), wherein the device is provided adjacent to the conveyor

9. A device for moving a loaded pallet according to any preceding claim wherein the flat sheet has a thickness of 8-10 mm.

10. A combination of a device according to any preceding claim and a loaded pallet (2).

11. A combination according to claim 10 wherein the actuator is adapted to exert a force on the loaded pallet according to the following formula: $Force \left(N\right) \geq \frac{1}{3} \times loaded pallet weight \left(Kg\right)$

12. A combination according to claim 10 or 11 wherein the loaded pallet weighs between 100-2000 Kg.

13. A combination according to any of claims 10 to 12 wherein the loaded pallet is a Euro pallet or a UK pallet.

14. A combination according to any of claims 10 to 13 wherein the pallet is a UK pallet and wherein the flat sheet has a thickness of 8-10 mm.

15. A method for moving a loaded pallet comprising the steps of;
providing a combination according to any of claims 10-14, and
pushing or pulling the loaded pallet over the slide path.
